# EUROPEAN PATENT SPECIFICATION

(11) **EP 4 489 124 B1**
(45) Date of publication and mention of the grant of the patent: **02.12.2026**
(21) Application number: 22928931.9
(22) Date of filing: 13.12.2022
(51) Int. Cl.: H01M 4/525, C01G 53/00, H01M 4/36, H01M 4/505, H01M 10/0525, H01M 4/131, C01G 53/506, H01M 4/02

(54) **POSITIVE ELECTRODE ACTIVE MATERIAL FOR NON-AQUEOUS ELECTROLYTE SECONDARY BATTERY, AND NON-AQUEOUS ELECTROLYTE SECONDARY BATTERY**
POSITIVELEKTRODENAKTIVMATERIAL FÜR EINE SEKUNDÄRBATTERIE MIT WASSERFREIEM ELEKTROLYT UND SEKUNDÄRBATTERIE MIT WASSERFREIEM ELEKTROLYT
MATÉRIAU ACTIF D'ÉLECTRODE POSITIVE POUR BATTERIE SECONDAIRE À ÉLECTROLYTE NON AQUEUX ET BATTERIE SECONDAIRE À ÉLECTROLYTE NON AQUEUX

(30) Priority: 28.02.2022 JP 2022029605
(43) Date of publication of application: 08.01.2025
(73) Proprietor: Panasonic Intellectual Property Management Co., Ltd., Kadoma-shi, Osaka 571-0057 (JP)
(72) Inventor: MURATA, Akiko, Kadoma-shi, Osaka 571-0057 (JP); KAWADA, Hiroshi, Kadoma-shi, Osaka 571-0057 (JP)
(74) Representative: Novagraaf International SA
(86) International application number: PCT/JP2022/045844
(87) International publication number: WO 2023/162414

(56) References cited:
- EP-A1- 3 955 344
- CN-A- 107 895 793
- CN-A- 111 430 679
- CN-A- 113 764 633
- CN-A- 113 903 918
- CN-A- 113 903 918
- JP-A- 2020 064 858
- JP-A- 2020 129 481
- KR-A- 20210 117 987
- US-A1- 2020 259 208
- US-A1- 2021 257 611

## Description

### TECHNICAL FIELD

The present disclosure relates to a technique for a positive electrode active material for a non-aqueous electrolyte secondary battery and the non-aqueous electrolyte secondary battery.

### BACKGROUND

In recent years, as a secondary battery having a high output and a high energy density, a non-aqueous electrolyte secondary battery has been widely used, in which the non-aqueous electrolyte secondary battery includes a positive electrode, a negative electrode, and a non-aqueous electrolyte, and performs charging and discharging by moving lithium ions and the like between the positive electrode and the negative electrode.

For example, Patent Literatures 1 to 11 propose a non-aqueous electrolyte secondary battery using a lithium-containing composite oxide containing W as a positive electrode active material for the non-aqueous electrolyte secondary battery.

### CITATION LIST

### PATENT LITERATURE

PATENT LITERATURE 1: JP 2017-117766 A
PATENT LITERATURE 2: JP 2017-084628 A
PATENT LITERATURE 3: JP 2016-207635 A
PATENT LITERATURE 4: JP 2014-197556 A
PATENT LITERATURE 5: JP 2013-152866 A
PATENT LITERATURE 6: JP 2014-183031 A
PATENT LITERATURE 7: JP 2017-033641 A
PATENT LITERATURE 8: JP 2016-091626 A
PATENT LITERATURE 9: JP 2013-161644 A
PATENT LITERATURE 10: JP 2012-238581 A
PATENT LITERATURE 11: JP 2015-130254 A

### SUMMARY

An object of the present disclosure is to provide a positive electrode active material for a non-aqueous electrolyte secondary battery capable of suppressing the amount of gas generated at the time of initial charging and discharging of the battery and reducing DC resistance (DCIR) of the battery, and a non-aqueous electrolyte secondary battery including the positive electrode active material for the non-aqueous electrolyte secondary battery.

A positive electrode active material for a non-aqueous electrolyte secondary battery according to one aspect of the present disclosure includes a composite oxide containing at least one element of Ni, Mn, Co, and Al, W, and Li, an intermediate layer formed on the composite oxide, the intermediate layer not containing W and containing at least one element of Ca, P, and B, and a coating layer formed on the intermediate layer, the coating layer containing W.

In addition, a non-aqueous electrolyte secondary battery according to one aspect of the present disclosure includes a positive electrode having the positive electrode active material for the non-aqueous electrolyte secondary battery.

According to one aspect of the present disclosure, it is possible to provide a positive electrode active material for a non-aqueous electrolyte secondary battery capable of suppressing the amount of gas generated at the time of initial charging and discharging of the battery and reducing DC resistance of the battery, and a non-aqueous electrolyte secondary battery including the positive electrode active material for the non-aqueous electrolyte secondary battery.

### BRIEF DESCRIPTION OF DRAWINGS

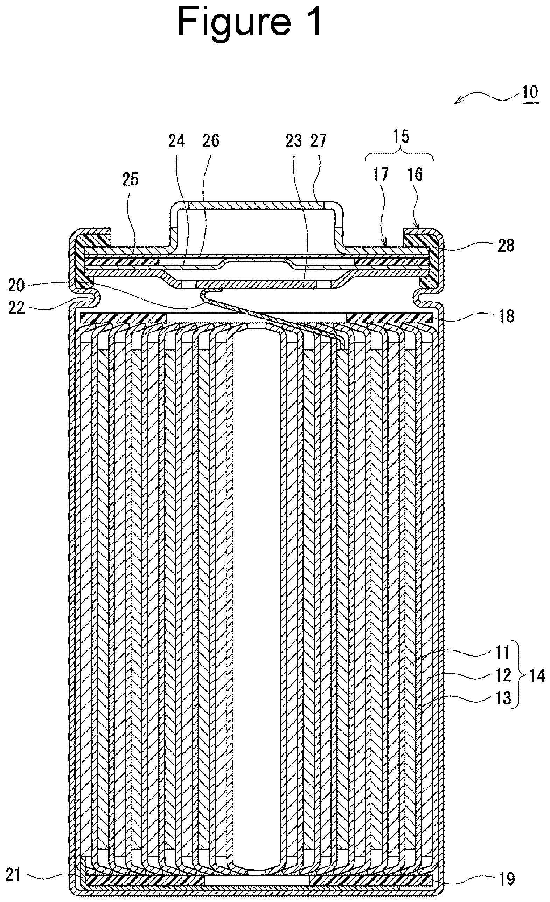

FIG. 1 is a cross-sectional view of a non-aqueous electrolyte secondary battery as an example of an embodiment.

### DESCRIPTION OF EMBODIMENTS

Hereinafter, an example of an embodiment will be described in detail. The drawings referred to in the description of embodiments are schematically illustrated, and dimensional ratios and the like of components drawn in the drawings may be different from actual ones.

FIG. 1 is a schematic cross-sectional view showing an example of a non-aqueous electrolyte secondary battery according to an embodiment. A non-aqueous electrolyte secondary battery 10 illustrated in FIG. 1 includes a winding-type electrode assembly 14 formed by winding a positive electrode 11 and a negative electrode 12 with a separator 13 interposed therebetween, a non-aqueous electrolyte, insulating plates 18 and 19 that are respectively disposed above and below the electrode assembly 14, and a battery case 15 housing the above-described members. The battery case 15 includes a bottomed cylindrical case body 16 and a sealing assembly 17 that closes an opening of the case body 16. Note that, instead of the winding-type electrode assembly 14, an electrode assembly having another form, such as a stacked electrode assembly in which positive electrodes and negative electrodes are alternately stacked with separators interposed therebetween, may be applied. Examples of the battery case 15 include metal cases having a cylindrical shape, a square shape, a coin shape, a button shape, or the like, and resin cases (so-called laminated type) formed by lamination with a resin sheet.

The non-aqueous electrolyte contains, for example, a non-aqueous solvent and an electrolyte salt dissolved in the non-aqueous solvent. Examples of the non-aqueous solvent include esters, ethers, nitriles, amides, and a mixture of two or more thereof. The non-aqueous solvent may contain a halogen-substituted product in which at least some hydrogen in a solvent described above is substituted with a halogen atom such as fluorine. Examples of the electrolyte salt include lithium salts such as LiPF₆. Note that the non-aqueous electrolyte is not limited to the liquid electrolyte, and may be a solid electrolyte in which a gel polymer or the like is used.

The case body 16 is, for example, a bottomed cylindrical metal container. A gasket 28 is provided between the case body 16 and the sealing assembly 17 to ensure the sealing performance inside the battery. The case body 16 has a projecting portion 22 in which, for example, a part of the side part of the case body 16 protrudes inwards to support the sealing assembly 17. The projecting portion 22 is preferably formed in an annular shape in the circumferential direction of the case body 16, and supports the sealing assembly 17 on the upper surface thereof.

The sealing assembly 17 is structured by layering, in sequence from the electrode assembly 14 side, a filter 23, a lower vent member 24, an insulating member 25, an upper vent member 26, and a cap 27. Each member included in the sealing assembly 17 has, for example, a disk shape or a ring shape, and the members excluding the insulating member 25 are electrically connected to each other. The lower vent member 24 and the upper vent member 26 are connected to each other at the respective center regions, and the insulating member 25 is interposed between the respective peripheral portions. When the internal pressure of the non-aqueous electrolyte secondary battery 10 increases due to heat generated by an internal short circuit or the like, for example, the lower vent member 24 is deformed so as to push the upper vent member 26 up toward the cap 27 side and breaks, and thus the current pathway between the lower vent member 24 and the upper vent member 26 is cut off. When the internal pressure is further increased, the upper vent member 26 is broken, and gas is discharged through the opening of the cap 27.

In the non-aqueous electrolyte secondary battery 10 illustrated in FIG. 1, a positive electrode lead 20 attached to the positive electrode 11 extends through a through-hole of the insulating plate 18 toward a side of the sealing assembly 17, and a negative electrode lead 21 attached to the negative electrode 12 extends through the outside of the insulating plate 19 toward the bottom side of the case body 16. The positive electrode lead 20 is connected to the lower surface of the filter 23, which is the bottom plate of the sealing assembly 17, by welding or the like, and the cap 27, which is electrically connected to the filter 23 and is the top plate of the sealing assembly 17, serves as a positive electrode terminal. The negative electrode lead 21 is connected to a bottom inner surface of the case body 16 by welding or the like, and the case body 16 becomes a negative electrode terminal.

Hereinafter, the positive electrode 11, the negative electrode 12, and the separator 13 will be described in detail.

### <Positive Electrode>

The positive electrode 11 includes a positive electrode current collector such as a metal foil and a positive electrode mixture layer formed on the positive electrode current collector. As the positive electrode current collector, a foil of a metal, such as aluminum, that is stable in a potential range of the positive electrode, a film in which the metal is disposed on its surface layer, or the like can be used. The positive electrode mixture layer includes, for example, a positive electrode active material, a binding agent, and a conductive agent.

The positive electrode 11 is obtained by, for example, applying a positive electrode mixture slurry containing a positive electrode active material, a binding agent, a conductive agent, and the like onto a positive electrode current collector, drying the positive electrode current collector, forming a positive electrode mixture layer on the positive electrode current collector, and rolling the positive electrode mixture layer.

The positive electrode active material includes composite particles having a composite oxide, an intermediate layer formed on the composite oxide, and a coating layer formed on the intermediate layer.

The composite oxide contains at least one element of Ni, Mn, Co, and Al, and contains W and Li. A ratio of Ni, Mn, Co, and Al in the composite oxide is, for example, preferably greater than or equal to 75 mol%, and more preferably greater than or equal to 85 mol%, with respect to a total molar amount of metal elements excluding Li, from the viewpoint of increasing the capacity of the battery, suppressing deterioration in charging and discharging cycle characteristics, and the like. A ratio of W in the composite oxide is, for example, preferably greater than or equal to 0.01 mol%, and more preferably greater than or equal to 0.05 mol%, with respect to a total molar amount of metal elements except Li, from the viewpoint that an amount of gas generated at the time of initial charging and discharging of the battery can be further suppressed, DC resistance of the battery can be further reduced, or the like.

An example of a suitable composite oxide includes a composite oxide represented by a general formula: Li₁₊ₓMa_{(1-z)}Mb_{z}W_{y}O₂ (in the formula, Ma is at least one of Ni, Mn, Co, and Al, Mb is at least one of Ti, Zr, Nb, Ta, Mo, Sb, Bi, Ca, Sr, Mg, Y, Sc, and V, and x, y, and z are 0.02 < x < 0.07, 0.0005 < y < 0.01, and 0 ≤ z < 0.1).

An example of a more suitable composite oxide includes a composite oxide represented by a general formula: Li₁₊ₓNi_{q}Ma_{(1-q-z)}Mb_{z}W_{y}O₂ (in the formula, Ma is at least one of Mn, Co, and Al, Mb is at least one of Ti, Zr, Nb, Ta, Mo, Sb, Bi, Ca, Sr, Mg, Y, Sc, and V, and x, y, and z are 0.02 < x < 0.07, 0.7 < q < 0.95, 0.0005 < y < 0.01, and 0 ≤ z < 0.1).

The intermediate layer formed on the composite oxide is an intermediate layer that does not contain W and contains at least one element of Ca, P, and B. When W is contained in the intermediate layer, the amount of gas generated at the time of initial charging and discharging of the battery or DC resistance of the battery increases as compared with a case in which W is not contained in the intermediate layer. A ratio of the molar amount of Ca, P, and B contained in the intermediate layer to the total molar amount of the composite oxide is, for example, preferably in the range of 0.01 mol% to 1 mol%, and more preferably in the range of 0.05 mol% to 0.5 mol% from the viewpoint of further suppressing the amount of gas generated at the time of initial charging and discharging of the battery or further reducing DC resistance of the battery.

The thickness of the intermediate layer is preferably in the range of 5 nm to 200 nm. When the thickness of the intermediate layer is less than 5 nm, a side reaction of the composite oxide under the intermediate layer is likely to occur at the time of charging and discharging, and thus the amount of gas generated at the time of initial charging and discharging of the battery or DC resistance of the battery may increase as compared with a case in which the thickness of the intermediate layer is greater than or equal to 5 nm. When the thickness of the intermediate layer exceeds 200 nm, the intermediate layer becomes a resistance component, so that a charging-and-discharging reaction of the composite oxide is inhibited, which may lead to deterioration in battery capacity. The thickness of the intermediate layer can be measured as follows. First, the positive electrode 11 or a composite particle is embedded in a resin, a cross section of the composite particle is exposed by cross section polisher (CP) processing or the like, and the cross section is imaged using a scanning electron microscope (SEM). Then, 30 composite particles are randomly selected from the cross-sectional SEM image. The thickness of the intermediate layer of each of the selected 30 composite particles is measured, and the average value thereof is calculated. Then, this average value is taken as the thickness of the intermediate layer.

A coating rate of the intermediate layer covering the composite oxide is, for example, preferably greater than or equal to 75%, and more preferably greater than or equal to 85%. When the coating rate of the intermediate layer is less than 75%, a side reaction of the composite oxide under the intermediate layer is likely to occur at the time of charging and discharging, and thus the amount of gas generated at the time of initial charging and discharging of the battery or the DC resistance of the battery may increase as compared with a case in which the coating rate of the intermediate layer is greater than or equal to 75%. The coating rate of the intermediate layer formed on the composite oxide is measured by X-ray photoelectron spectroscopy (XPS). Specifically, the coating rate is calculated from the molar fraction of the element (Ca, P, and B) of the intermediate layer with respect to a total molar amount of a metal element of the composite oxide (when the molar fraction of Ca, P, and B is 1, the surface coating rate is 100%).

The coating layer formed on the intermediate layer is a coating layer containing W. The presence of the coating layer containing W on the intermediate layer suppresses the amount of gas generated at the time of initial charging and discharging of the battery and reduces the DC resistance of the battery as compared with a case in which the coating layer containing W is not present. A ratio of the molar amount of W in the coating layer to the total molar amount of the composite oxide is preferably in the range of 0.05 mol% to 1 mol%, and more preferably in the range of 0.05 mol% to 0.5 mol% from the viewpoint of further suppressing the amount of gas generated at the time of initial charging and discharging of the battery, further reducing the DC resistance of the battery, and the like.

The coating rate of the coating layer formed on the intermediate layer is, for example, preferably in the range of 10% to 40%, and more preferably in the range of 10% to 25%. If the coating rate of the coating layer becomes too high, the coating layer may inhibit the charging-and-discharging reaction of the composite oxide, leading to deterioration in battery capacity. The coating rate of the coating layer is measured by X-ray photoelectron spectroscopy. Specifically, the coating rate is calculated from the molar fraction of the element (W) of the coating layer with respect to the total molar amount of the metal element of the composite oxide and the element (Ca, P, and B) of the intermediate layer.

Confirmation of the composition of the composite oxide can be performed by, for example, Rietveld analysis on parameters obtained by inductively coupled plasma emission spectrometry, X-ray photoelectron spectroscopy, and powder X-ray diffraction. Qualitative and quantitative analysis of the intermediate layer and the coating layer can be performed by X-ray photoelectron spectroscopy, inductively coupled plasma emission spectroscopy, an electronic probe macroanalyzer (EPMA), or the like. The analysis by EPMA is, for example, a method of exposing a cross section of a sample to be analyzed and analyzing the cross section of the sample by EPMA mapping (cross section EPMA mapping analysis).

An example of a method of producing composite particles will be described.

First, hydroxide or oxide containing at least one element of Ni, Mn, Co, and Al, a Li compound, and a W compound are mixed, and the mixture thereof is fired to obtain a composite oxide containing at least one element of Ni, Mn, Co, and Al, W, and Li.

As the hydroxide containing at least one element of Ni, Mn, Co, and Al, for example, an alkaline solution such as sodium hydroxide is added dropwise while stirring an aqueous solution such as Ni salt, Co salt, and Al salt so as to adjust pH to the alkali side (for example, 8.5 to 11.5), thereby precipitating (coprecipitating) a composite hydroxide containing Ni, Co, Al, or the like. The Li compound is, for example, lithium hydroxide, lithium carbonate, or the like. The W compound is tungsten oxide such as WO₃.

The firing temperature of the mixture is, for example, in the range of 500°C to 900°C, and the firing time is, for example, in the range of 1 hour to 20 hours.

Next, a compound containing at least one element of Ca, P, and B is deposited on the surface of the obtained composite oxide. The deposition method may be a wet method or a dry method, but the wet method is preferable in that the coating rate of the intermediate layer can be increased. Specifically, a solution containing the compound containing at least one element of Ca, P, and B is dropped or sprayed onto the obtained composite oxide. As a result, particles in which an intermediate layer containing at least one element of Ca, P, and B is formed on the surface of the composite oxide are obtained. Alternatively, the obtained composite oxide is put into the solution containing the compound containing at least one element of Ca, P, and B, and then is stirred. After the mixture thereof is stirred, solution is filtered so as to obtain particles in which the intermediate layer containing at least one element of Ca, P, and B is formed on the surface of the composite oxide.

The solution containing the compound containing at least one element of Ca, P, and B is preferably an alkaline solution so that the compound is easily dissolved. The compound containing Ca is, for example, calcium hydroxide, calcium phosphate, calcium dihydrogen phosphate, hydroxyapatite, calcium carbonate, calcium acetate, or calcium oxide, the compound containing P is, for example, phosphoric acid, lithium phosphate, phosphonic acid, calcium phosphate, calcium dihydrogen phosphate, or hydroxyapatite, and the compound containing B is, for example, boric acid, lithium metaborate, or lithium tetraborate.

In order to fix the intermediate layer to the particle surface of the composite oxide, the particles obtained as described above may be heated and dried under reduced pressure. The heating and drying temperature is, for example, in the range of 100°C to 300°C, and the heating and drying time is, for example, in the range of 1 hour to 5 hours.

Then, a compound containing W is deposited on the intermediate layer of the obtained particles. The deposition method may be a wet method or a dry method. However, when the coating rate of the coating layer is high, the battery capacity and the like are affected, and thus the dry method is preferable from the viewpoint of suppressing the coating rate of the coating layer. Specifically, the obtained particles and the compound containing W are mixed, and the mixture thereof is heated and dried under reduced pressure. The W compound is tungsten oxide such as WO₃. The heating and drying temperature is, for example, in the range of 100°C to 300°C, and the heating and drying time is, for example, in the range of 1 hour to 5 hours. As described above, it is possible to obtain the composite particle of the present embodiment in which the coating layer containing W is formed on the surface of the intermediate layer formed on the composite oxide.

Examples of the conductive agent included in the positive electrode mixture layer include fibrous carbon such as carbon black, acetylene black, Ketjenblack, graphene, and carbon nanotube, and carbon materials such as graphite. Examples of the binding agent contained in the positive electrode mixture layer include a fluororesin such as polytetrafluoroethylene (PTFE) or polyvinylidene fluoride (PVdF), polyacrylonitrile (PAN), a polyimide-based resin, an acrylic resin, a polyolefin-based resin, styrene-butadiene rubber (SBR), carboxymethyl cellulose (CMC) or a salt thereof, polyacrylic acid (PAA) or a salt thereof (PAA-Na, PAA-K, and the like, or a partially neutralized salt may be used), polyethylene oxide (PEO), and polyvinyl alcohol (PVA).

### <Negative Electrode>

The negative electrode 12 includes, for example, a negative electrode current collector such as a metal foil and a negative electrode mixture layer formed on the negative electrode current collector. The negative electrode current collector may be, for example, a foil of a metal, such as copper, that is stable in a potential range of the negative electrode, a film in which the metal is disposed on its surface layer. The negative electrode mixture layer contains, for example, a negative electrode active material, a binding agent, and the like.

The negative electrode 12 is obtained by, for example, applying a negative electrode mixture slurry containing a negative electrode active material, a binding agent, and the like onto a negative electrode current collector and drying the negative electrode current collector so as to form a negative electrode mixture layer on the negative electrode current collector, and rolling the negative electrode mixture layer. The negative electrode mixture layer may be provided on one surface of the negative electrode current collector, or may be provided on both surfaces of the negative electrode current collector.

The negative electrode active material is, for example, a material capable of occluding and releasing lithium ions, and specific examples thereof include a carbon material, a metal capable of forming an alloy with lithium, and an alloy compound containing the metal. As the carbon material, natural graphite, non-graphitizable carbon, graphites such as artificial graphite, cokes, and the like can be used. Examples of the alloy compound include a compound containing at least one metal capable of forming an alloy with lithium. An element capable of forming an alloy with lithium is preferably silicon or tin, and silicon oxide, tin oxide, or the like in which silicon and tin are bonded to oxygen can also be used. In addition, a mixture of the carbon material and a compound of silicon or tin can be used. In addition thereto, lithium titanate or the like can also be used.

As the binding agent, for example, the same material as the positive electrode 11 may be used. The negative electrode mixture layer may contain a conductive agent. The same conductive agent as the positive electrode 11 may be used.

### <Separator>

As the separator 13, for example, a porous sheet having an ion permeation property and an insulation property is used. Specific examples of the porous sheet include a fine porous thin film, a woven fabric, and a non-woven fabric. As a material of the separator 13, olefin-based resins such as polyethylene and polypropylene, cellulose, and the like are suitable. The separator 13 may be a laminate including a cellulose fiber layer and a thermoplastic resin fiber layer such as an olefin-based resin. The separator may be a multilayer separator including a polyethylene layer and a polypropylene layer, and a separator may be used that has a surface to which a material such as an aramid-based resin or a ceramic is applied.

### [Embodiments]

Hereinafter, the present disclosure will be further described with reference to embodiments. However, the present disclosure is not limited to these embodiments.

### <First Embodiment>

### [Production of Composite Particles]

A composite oxide containing Ni, Mn, Nb, W, and Li (general formula: LiNi_{0.82}Mn_{0.18}Nb_{0.0025}W_{0.005}O₂) was added to water, the mixture thereof was stirred, and then the solution was filtered by suction. Thereafter, a solution (concentration: 0.02 mol/L) in which calcium dihydrogen phosphate was dissolved was added and filtered again. The obtained filtered product and tungsten oxide were mixed at a molar ratio of 1:0.001, and the mixture thereof was dried at 180°C for 2 hours under reduced pressure, thereby obtaining composite particles.

As a result of analyzing the obtained composite particles by XPS and cross-sectional EPMA mapping analysis, it was confirmed that an intermediate layer containing Ca and P and not containing W was formed on the composite oxide containing Ni, Mn, Nb, W, and Li, and a coating layer containing W was formed on the intermediate layer. The composite particles were used as a positive electrode active material.

### [Manufacture of Positive Electrode]

After mixing 98 parts by mass of the positive electrode active material, 1 part by mass of acetylene black (AB) as a conductive agent, and 1 part by mass of polyvinylidene fluoride as a binding agent, an appropriate amount of N-methyl-2-pyrrolidone (NMP) was added to prepare a positive electrode mixture slurry. Next, the positive electrode mixture slurry was applied onto both surfaces of a positive electrode current collector formed of an aluminum foil, and a coating film was dried and then rolled using a rolling roller. As such, a positive electrode in which a positive electrode mixture layer was formed on both surfaces of the positive electrode current collector was manufactured.

### [Manufacture of Negative Electrode]

98 parts by mass of graphite, 1 part by mass of carboxymethyl cellulose (CMC), and 1 part by mass of styrene-butadiene rubber (SBR) were mixed to prepare a negative electrode mixture slurry. Next, the negative electrode mixture slurry was applied onto both surfaces of a negative electrode current collector formed of a copper foil, and a coating film was dried and then rolled using a rolling roller. As such, a negative electrode in which a negative electrode mixture layer was formed on both surfaces of the negative electrode current collector was manufactured.

### [Preparation of Non-Aqueous Electrolyte]

Ethylene carbonate (EC), dimethyl carbonate (DMC), and ethyl methyl carbonate (EMC) were mixed at a volume ratio of 20:75:5. LiPF₆ was dissolved in the mixed solvent so as to attain a concentration of 1.3 mol/L to prepare a non-aqueous electrolyte.

### [Preparation of Battery]

Each of the positive electrode and the negative electrode was cut into a predetermined size, an electrode lead was attached thereto, and the positive electrode and the negative electrode were wound with a separator interposed therebetween, thereby producing a winding-type electrode assembly. Next, the electrode assembly was housed in an aluminum laminate film, and the non-aqueous electrolyte was injected and sealed. This was used as a non-aqueous electrolyte secondary battery of the first embodiment.

### <Second Embodiment>

The composite particle was obtained by the same method as in the first embodiment, except that a solution in which borate salt was dissolved (B concentration: 0.6 mol/L, pH: 10) was used instead of a solution in which calcium dihydrogen phosphate was dissolved in the preparation of the composite particles. As a result of analyzing the obtained composite particles in the same manner as in the first embodiment, it was confirmed that an intermediate layer containing B and not containing W was formed on the composite oxide containing Ni, Mn, Nb, W, and Li, and a coating layer containing W was formed on the intermediate layer. Then, the non-aqueous electrolyte secondary battery was produced in the same manner as in the first embodiment, except that the composite particles were used as a positive electrode active material.

### <First Comparative Example>

The non-aqueous electrolyte secondary battery was produced in the same manner as in the first embodiment, except that the composite oxide containing Ni, Mn, Nb, W, and Li used in the first embodiment was used as a positive electrode active material.

### <Second Comparative Example>

The composite oxide containing Ni, Mn, Nb, W, and Li used in the first embodiment and tungsten oxide were mixed at a molar ratio of 1:0.001, and the mixture thereof was dried at 180°C for 2 hours under reduced pressure, thereby obtaining composite particles.

As a result of analyzing the obtained composite particles in the same manner as in the first embodiment, it was confirmed that the coating layer containing W was formed on the composite oxide containing Ni, Mn, Nb, W, and Li. The non-aqueous electrolyte secondary battery was produced in the same manner as in the first embodiment, except that the composite particles were used as a positive electrode active material.

### <Third Comparative Example>

The composite oxide containing Ni, Mn, Nb, W, and Li (general formula: LiNi_{0.82}Mn_{0.18}Nb_{0.0025}W_{0.005}O₂) was added to water, the mixture thereof was stirred, and then the solution was filtered by suction. Thereafter, a solution (concentration: 0.02 mol/L) in which calcium dihydrogen phosphate was dissolved was added and filtered again. The obtained filtered product was dried at 180°C for 2 hours under reduced pressure, thereby obtaining composite particles.

As a result of analyzing the obtained composite particles in the same manner as in the first embodiment, it was confirmed that the coating layer containing Ca and P was formed on the composite oxide containing Ni, Mn, Nb, W, and Li. The non-aqueous electrolyte secondary battery was produced in the same manner as in the first embodiment, except that the composite particles were used as a positive electrode active material.

### <Fourth Comparative Example>

The filtered product obtained in the first embodiment and boric acid were mixed at a molar ratio of 1:0.01, and the mixture thereof was dried at 180°C for 2 hours under reduced pressure, thereby obtaining composite particles.

As a result of analyzing the obtained composite particles in the same manner as in the first embodiment, it was confirmed that the intermediate layer containing Ca and P and not containing W was formed on the composite oxide containing Ni, Mn, Nb, W, and Li, and a coating layer containing B and not containing W was formed on the intermediate layer. The non-aqueous electrolyte secondary battery was produced in the same manner as in the first embodiment, except that the composite particles were used as a positive electrode active material.

### <Fifth Comparative Example>

A composite oxide containing Ni, Mn, Nb, Ca, W, and Li (general formula: LiNi_{0.82}Mn_{0.18}Nb_{0.0025}W_{0.005}Ca_{0.0075}O₂) and boric acid were mixed at a molar ratio of 1:0.0025, and the mixture thereof was heated at 300°C for 2 hours under an oxygen atmosphere, thereby obtaining composite particles.

As a result of analyzing the obtained composite particles in the same manner as in the first embodiment, it was confirmed that the coating layer containing B and not containing W was formed on the composite oxide containing Ni, Mn, Nb, Ca, W, and Li. The non-aqueous electrolyte secondary battery was produced in the same manner as in the first embodiment, except that the composite particles were used as a positive electrode active material.

### <Sixth Comparative Example>

The composite oxide used in the fifth comparative example was added to water and stirred, and then this solution was filtered by suction. Thereafter, a solution (W concentration: 0.06 mol/L, pH: 11) in which tungsten oxide was dissolved was added, and suction filtration was performed again. The obtained filtered product and tungsten oxide were mixed at a molar ratio of 1:0.001, and the mixture thereof was dried at 180°C for 2 hours under reduced pressure, thereby obtaining composite particles.

As a result of analyzing the obtained composite particles in the same manner as in the first embodiment, it was confirmed that an intermediate layer containing W was formed on the composite oxide containing Ni, Mn, Nb, Ca, W, and Li, and a coating layer containing W was formed on the intermediate layer. The non-aqueous electrolyte secondary battery was produced in the same manner as in the first embodiment, except that the composite particles were used as a positive electrode active material.

### [Measurement of Amount of Gas Generated at Initial Charging and Discharging]

The volumes of the non-aqueous electrolyte secondary batteries of the respective embodiments and the respective comparative examples were measured by the Archimedes method. Then, under an environmental temperature of 25°C, the non-aqueous electrolyte secondary batteries of the respective embodiments and the respective comparative examples were charged at a constant voltage at a constant current of 0.5 C until a voltage reached 4.2 V, and then charged at a constant voltage until the current reached 0.05 C. Thereafter, each of the batteries was subjected to constant current discharge at a constant current of 0.5 C until the battery voltage reached 2.5 V. Then, the volumes of the non-aqueous electrolyte secondary batteries of the respective embodiments and the respective comparative examples after charging and discharging were measured by the Archimedes method. The amount of gas generated at the time of initial charging and discharging was calculated by subtracting the volume of the non-aqueous electrolyte secondary battery measured before charging and discharging from the volume of the non-aqueous electrolyte secondary battery measured after charging and discharging. The Archimedes method is a method in which an object to be measured (in this example, a non-aqueous electrolyte secondary battery) is immersed in a liquid medium (for example, distilled water, alcohol, and the like), and buoyancy received by the object to be measured is measured so as to determine the volume of the object to be measured.

### [Measurement of DC resistance of battery]

Under an environmental temperature of 25°C, the secondary batteries of the respective embodiments and the respective comparative examples were charged at a constant voltage at a constant current of 0.5 C until the voltage reached 4.2 V, and then charged at a constant voltage until the current reached 0.05 C. Thereafter, each of the batteries was subjected to constant current discharge at a constant current of 0.5 C until the battery voltage reached 2.5 V. Then, the secondary batteries of the respective embodiments and the respective comparative examples were charged to SOC50% at a constant current of 0.5 C. The voltage at this time was defined as V0. Next, discharge was performed at a constant current of 0.5 C for 10 seconds. The voltage at this time was defined as V1. Then, the DC resistance (DCIR) was obtained from the following formula. $DCIR = \left(V0-V1\right) / 0.5 It$

Table 1 shows the gas generation amount and the DC resistance of the battery at the time of initial charging and discharging in each of the embodiments and the comparative examples.

**[Table 1]**

| | Constituent elements of composite oxide | Constituent elements of intermediate layer | Constituent elements of coating layer | Gas generation amount [ml] | DC resistance [Ω] |
|---|---|---|---|---|---|
| First embodiment | Ni, Mn, W, Nb, Li | Ca, P | W | 0.030 | 1.92 |
| Second embodiment | Ni, Mn, W, Nb, Li | B | W | 0.025 | 2.00 |
| First comparative example | Ni, Mn, W, Nb, Li | - | - | 0.063 | 1.88 |
| Second comparative example | Ni, Mn, W, Nb, Li | - | W | 0.062 | 1.80 |
| Third comparative example | Ni, Mn, W, Nb, Li | - | Ca, P | 0.025 | 2.18 |
| Fourth comparative example | Ni, Mn, W, Nb, Li | Ca, P | B | 0.026 | 2.08 |
| Fifth comparative example | Ni, Mn, W, Nb, Ca, Li | - | B | 0.037 | 2.14 |
| Sixth comparative example | Ni, Mn, W, Nb, Ca, Li | W | W | 0.049 | 2.21 |

In all of the non-aqueous electrolyte secondary batteries of the first and second embodiments, the amount of gas generated at the time of initial charging and discharging was small, and the DC resistance of the battery showed a low value. On the other hand, in the non-aqueous electrolyte secondary battery of the first to sixth comparative examples, the amount of gas generated at the time of initial charging and discharging was increased, or the DC resistance of the battery was increased, so that it was not possible to achieve both suppression of the amount of gas generated at the time of initial charging and discharging of the battery and reduction of the DC resistance of the battery. Therefore, by forming an intermediate layer containing at least one element of Ca, P, and B without containing W on a composite oxide containing W, and further using a positive electrode active material in which a coating layer containing W is formed on the intermediate layer, it is possible to suppress the amount of gas generated at the time of initial charging and discharging of the battery and to reduce the DC resistance of the battery.

### REFERENCE SIGNS LIST

- 10: NON-AQUEOUS ELECTROLYTE SECONDARY BATTERY
- 11: POSITIVE ELECTRODE
- 12: NEGATIVE ELECTRODE
- 13: SEPARATOR
- 14: ELECTRODE ASSEMBLY
- 15: BATTERY CASE
- 16: CASE BODY
- 17: SEALING ASSEMBLY
- 18, 19: INSULATING PLATE
- 20: POSITIVE ELECTRODE LEAD
- 21: NEGATIVE ELECTRODE LEAD
- 22: PROJECTING PORTION
- 23: FILTER
- 24: LOWER VENT MEMBER
- 25: INSULATING MEMBER
- 26: UPPER VENT MEMBER
- 27: CAP
- 28: GASKET

## Claims

1. A positive electrode active material for a non-aqueous electrolyte secondary battery (10), the positive electrode active material comprising:
a composite oxide containing at least one element of Ni, Mn, Co, and Al, W, and Li;
an intermediate layer formed on the composite oxide, the intermediate layer not containing W and containing at least one element of Ca, P, and B; and
a coating layer formed on the intermediate layer, the coating layer containing W.

2. The positive electrode active material for a non-aqueous electrolyte secondary battery (10) according to claim 1, wherein the composite oxide is represented by a general formula: Li₁₊ₓMa_{(1-z)}Mb_{z}W_{y}O₂ (in the formula, Ma is at least one of Ni, Mn, Co, and Al, Mb is at least one of Ti, Zr, Nb, Ta, Mo, Sb, Bi, Ca, Sr, Mg, Y, Sc, and V, and x, y, and z are 0.02 < x < 0.07, 0.0005 < y < 0.01, and 0 ≤ z< 0.1).

3. The positive electrode active material for a non-aqueous electrolyte secondary battery (10) according to claim 2, wherein the composite oxide is represented by a general formula: Li₁₊ₓNi_{q}Ma_{(1-q-z)}Mb_{z}W_{y}O₂ (in the formula, Ma is at least one of Mn, Co, and Al, Mb is at least one of Ti, Zr, Nb, Ta, Mo, Sb, Bi, Ca, Sr, Mg, Y, Sc, and V, and x, y, and z are 0.02 < x < 0.07, 0.7 < q < 0.95, 0.0005 < y < 0.01, and 0 ≤ z < 0.1).

4. The positive electrode active material for a non-aqueous electrolyte secondary battery (10) according to any one of claims 1 to 3, wherein a ratio of a molar amount of W in the coating layer to a total molar amount of the composite oxide is in a range of 0.05 mol% to 1 mol%.

5. The positive electrode active material for a non-aqueous electrolyte secondary battery (10) according to any one of claims 1 to 4, wherein a thickness of the intermediate layer is in a range of 5 nm to 200 nm.

6. A non-aqueous electrolyte secondary battery (10) comprising a positive electrode (11) having the positive electrode active material for the non-aqueous electrolyte secondary battery (10) according to any one of claims 1 to 5.

## Patentansprüche

1. Aktivmaterial für eine positive Elektrode für eine Sekundärbatterie mit nichtwässrigem Elektrolyt (10), wobei das Aktivmaterial für eine positive Elektrode umfasst:
ein Verbundoxid, das mindestens ein Element aus Ni, Mn, Co und Al, W und Li enthält;
eine Zwischenschicht, die auf dem Verbundoxid gebildet ist, wobei die Zwischenschicht kein W enthält und mindestens ein Element aus Ca, P und B enthält; und
eine Beschichtungsschicht, die auf der Zwischenschicht gebildet ist, wobei die Beschichtungsschicht W enthält.

2. Aktivmaterial für eine positive Elektrode für eine Sekundärbatterie mit nichtwässrigem Elektrolyt (10) nach Anspruch 1, wobei das Verbundoxid durch eine allgemeine Formel dargestellt ist: Li₁₊ₓMa_{(1-z)}Mb_{z}W_{y}O₂ (in der Formel ist Ma mindestens eines von Ni, Mn, Co und Al, ist Mb mindestens eines von Ti, Zr, Nb, Ta, Mo, Sb, Bi, Ca, Sr, Mg, Y, Sc und V, und sind x, y und z 0.02 < x < 0.07, 0.0005 < y < 0.01 und 0 ≤ z < 0.1).

3. Aktivmaterial für eine positive Elektrode für eine Sekundärbatterie mit nichtwässrigem Elektrolyt (10) nach Anspruch 2, wobei das Verbundoxid durch eine allgemeine Formel dargestellt ist: Li₁₊ₓNi_{q}Ma_{(1-q-z)}Mb_{z}W_{y}O₂ (in der Formel ist Ma mindestens eines von Mn, Co und Al, ist Mb mindestens eines von Ti, Zr, Nb, Ta, Mo, Sb, Bi, Ca, Sr, Mg, Y, Sc und V, und sind x, y und z 0.02 < x < 0.07, 0.7 < q < 0.95, 0.0005 < y < 0.01 und 0 ≤ z < 0.1).

4. Aktivmaterial für eine positive Elektrode für eine Sekundärbatterie mit nichtwässrigem Elektrolyt (10) nach einem der Ansprüche 1 bis 3, wobei ein Verhältnis einer Molmenge von W in der Beschichtungsschicht zu einer gesamten Molmenge des Verbundoxids in einem Bereich von 0.05 Mol-% bis 1 Mol-% liegt.

5. Aktivmaterial für eine positive Elektrode für eine Sekundärbatterie mit nichtwässrigem Elektrolyt (10) nach einem der Ansprüche 1 bis 4, wobei eine Dicke der Zwischenschicht in einem Bereich von 5 nm bis 200 nm liegt.

6. Sekundärbatterie mit nichtwässrigem Elektrolyt (10), umfassend eine positive Elektrode (11) mit dem Aktivmaterial für eine positive Elektrode für die Sekundärbatterie mit nichtwässrigem Elektrolyt (10) nach einem der Ansprüche 1 bis 5.

## Revendications

1. Matériau actif d'électrode positive pour une batterie secondaire à électrolyte non aqueux (10), le matériau actif d'électrode positive comprenant :
un oxyde composite contenant au moins un élément parmi Ni, Mn, Co et Al, W et Li ;
une couche intermédiaire formée sur l'oxyde composite, la couche intermédiaire ne contenant pas de W et contenant au moins un élément parmi Ca, P et B ; et
une couche de revêtement formée sur la couche intermédiaire, la couche de revêtement contenant du W.

2. Matériau actif d'électrode positive pour une batterie secondaire à électrolyte non aqueux (10) selon la revendication 1, dans lequel l'oxyde composite est représenté par une formule générale : Li₁₊ₓMa_{(1-z)}Mb_{z}W_{y}O₂ (dans la formule, Ma est au moins l'un parmi Ni, Mn, Co et Al, Mb est au moins l'un parmi Ti, Zr, Nb, Ta, Mo, Sb, Bi, Ca, Sr, Mg, Y, Sc et V, et x, y et z sont 0.02 < x < 0.07, 0.0005 < y < 0.01 et 0 ≤ z < 0.1).

3. Matériau actif d'électrode positive pour une batterie secondaire à électrolyte non aqueux (10) selon la revendication 2, dans lequel l'oxyde composite est représenté par une formule générale : Li₁₊ₓNi_{q}Ma_{(1-q-z)}Mb_{z}W_{y}O₂ (dans la formule, Ma est au moins l'un parmi Mn, Co et Al, Mb est au moins l'un parmi Ti, Zr, Nb, Ta, Mo, Sb, Bi, Ca, Sr, Mg, Y, Sc et V, et x, y et z sont 0.02 < x < 0.07, 0.7 < q < 0.95, 0.0005 < y < 0.01 et 0 ≤ z < 0.1).

4. Matériau actif d'électrode positive pour une batterie secondaire à électrolyte non aqueux (10) selon l'une quelconque des revendications 1 à 3, dans lequel un rapport d'une quantité molaire de W dans la couche de revêtement à une quantité molaire totale de l'oxyde composite est dans une plage de 0.05 % en moles à 1 % en moles.

5. Matériau actif d'électrode positive pour une batterie secondaire à électrolyte non aqueux (10) selon l'une quelconque des revendications 1 à 4, dans lequel une épaisseur de la couche intermédiaire est dans une plage de 5 nm à 200 nm.

6. Batterie secondaire à électrolyte non aqueux (10) comprenant une électrode positive (11) ayant le matériau actif d'électrode positive pour la batterie secondaire à électrolyte non aqueux (10) selon l'une quelconque des revendications 1 à 5.
